# EUROPÄISCHE PATENTSCHRIFT

(11) **EP 3 573 880 B1**
(45) Veröffentlichungstag und Bekanntmachung des Hinweises auf die Patenterteilung: **24.03.2021**
(21) Anmeldenummer: 17835824.8
(22) Anmeldetag: 18.12.2017
(51) Int. Cl.: B62D 21/11, B62D 29/00

(54) **TRÄGER ZUM LAGERN EINER FAHRZEUGEINRICHTUNG FÜR EIN KRAFTFAHRZEUG**
SUPPORT FOR POSITIONING A VEHICLE DEVICE ON A MOTOR VEHICLE
SUPPORT POUR LE MONTAGE D'UN DISPOSITIF DE VÉHICULE DESTINÉ À UN VÉHICULE À MOTEUR

(30) Priorität: 26.01.2017 DE 102017201260
(43) Veröffentlichungstag der Anmeldung: 04.12.2019
(73) Patentinhaber: ZF Friedrichshafen AG, 88046 Friedrichshafen (DE)
(72) Erfinder: KRAMER, Thomas, 26133 Oldenburg (DE); GESSNER, Johannes, 97502 Euerbach (DE); BRUNNER, Konstantin, 49401 Damme (DE); BRAUN, Melanie, 97421 Schweinfurt (DE); RUPFLIN, Thomas, 88719 Stetten (DE)
(74) Vertreter: ZF Friedrichshafen AG
(86) Internationale Anmeldenummer: PCT/EP2017/083213
(87) Internationale Veröffentlichungsnummer: WO 2018/137849

(56) Entgegenhaltungen:
- WO-A1-2016/151482
- DE-A1-102011 005 564
- DE-A1-102012 213 663
- DE-A1-102013 210 702
- FR-A1- 3 037 552

## Beschreibung

Die Erfindung betrifft einen Träger zum Lagern einer Fahrzeugeinrichtung für ein Kraftfahrzeug, mit einer Grundstruktur, wobei die Grundstruktur aus Kunststoff gebildet ist und mit mindestens einer Anbindungsstelle zum Anordnen der Fahrzeugeinrichtung an dem Träger.

Ein derartiger Träger ist aus der DE 10 2014 112 090 A1 bekannt. Hierbei wird jedoch zusätzlich zu einer Unterschale aus Kunststoff zusätzlich eine Oberschale aus einem metallischen Material eingesetzt. Hierbei bildet die Oberschale aus dem metallischen Material den Konturgeber der Gesamtkonstruktion.

Die DE 10 2011 005564 A1 offenbart einen Träger gemäß dem Oberbegriff des Anspruchs 1. Aus dieser Schrift ist ein Fahrzeug-Achsträger bekannt, der rohrförmige Längsträger aus einer Leichtmetall-Legierung und Querträger aus kohlefaserverstärktem Kunststoff hat. Zudem sind aus einer Leichtmetall-Legierung bestehende Anschlusselemente für die Verbindung von Querträgern mit den Längsträgern vorhanden.

Im Automobilbau besteht ein grundsätzliches Bestreben, eine Gewichtseinsparung zu realisieren, um den Energieverbrauch eines Kraftfahrzeuges und damit die Umweltbelastung zu reduzieren. Daher werden im Automobilbau verstärkt Kunststoffmaterialien, insbesondere faserverstärkte Kunststoffe, eingesetzt. Zudem ist der Einsatz von Hybridbauteilen bekannt, die mindestens einen Bestandteil aus Kunststoff und mindestens einen weiteren Bestandteil aus Metall aufweisen.

Im Hinblick auf die Verwendung von Kunststoffen kann nachteilig sein, dass die Steifigkeit nicht den Anforderungen an die Fahrdynamik und/oder eines Crash-Verhaltens genügt. So besteht die Gefahr, dass einige Kunststoffe unter Belastung bzw. bei Überlastung zu brechen drohen. Insbesondere im Falle eines Unfalls bzw. Crashs besteht die Gefahr eines unkontrollierbaren und/oder unerwünschten Brechens eines entsprechenden Trägers.

Es ist die der Erfindung zu Grunde liegende Aufgabe, einen Träger der eingangs genannten Art derart weiterzuentwickeln, dass ein gewichtssparender Träger bereitgestellt wird, wobei zugleich ein hinreichendes Crash-Verhalten gewährleistet ist. Insbesondere soll eine alternative Ausführungsform bereitgestellt werden.

Die der Erfindung zu Grunde liegende Aufgabe wird mit einem Träger nach Anspruch 1 gelöst. Bevorzugte Weiterbildungen der Erfindung finden sich in den Unteransprüchen und in der nachfolgenden Beschreibung.

Ein erfindungsgemäßer Träger ist zum Lagern, Tragen oder Halten einer Fahrzeugeinrichtung ausgebildet. Bei einer solchen Fahrzeugeinrichtung kann es sich um ein Fahrwerkbauteil, einen Lenker, ein Fahrzeugaggregat, eine Getriebebrücke, einen Getriebeträger, ein Getriebe, ein Achsgetriebe und/oder ein Hinterachsgetriebe handeln. Hierbei kann die Fahrzeugeinrichtung und/oder das Achsgetriebe aus mehreren Teilen zusammengesetzt sein. Insbesondere ist die Fahrzeugeinrichtung als ein Fahrzeugmodul und/oder ein Fahrzeugsystem, vorzugsweise ein Hinterachssystem oder Hinterradlenkungssystem, ausgebildet.

Der Träger und/oder die Fahrzeugeinrichtung ist für die Verwendung in einem Kraftfahrzeug vorgesehen. Der Träger weist eine Grundstruktur auf. Insbesondere gibt diese Grundstruktur die Grundform des Trägers und/oder der Gesamtkonstruktion des Trägers vor. Des Weiteren ist die Grundstruktur aus einem Kunststoff gebildet. Hierdurch kann eine Gewichtseinsparung bzw. ein Leichtbau realisiert werden. Darüber hinaus weist der Träger, insbesondere die Grundstruktur, mindestens eine Anbindungsstelle zum Anordnen der Fahrzeugeinrichtung an dem Träger auf. Vorzugsweise dient die Anbindungsstelle zum Befestigen und/oder Halten der Fahrzeugeinrichtung an dem Träger. Erfindungsgemäß ist der Anbindungsstelle ein aus Metall ausgebildetes Halteelement zugeordnet. Hierbei ist das Halteelement zum Aufnehmen von Kräften, insbesondere zum Verformen und/oder Dehnen, in einem Crash-Szenario ausgebildet.

Hierbei ist von Vorteil, dass mittels des aus Metall ausgebildeten Halteelementes ein hinreichendes Crash-Verhalten des Trägers realisierbar ist. Insbesondere ist das Halteelement zum Halten und/oder Befestigen der Fahrzeugeinrichtung an dem Träger ausgebildet. Somit kann das Halteelement ein wesentlicher Bestandteil der Anbindungsstelle sein. Vorzugsweise ist die Fahrzeugeinrichtung mindestens teilweise mittels des Halteelementes an dem Träger befestigbar. Zugleich kann das Halteelement zum Verformen und/oder Dehnen in einem Crash-Szenario ausgebildet sein, so dass in Abhängigkeit von den jeweiligen Anforderungen ein kontrollierbares Crash-Verhalten des Trägers definierbar ist.

Vorzugsweise ist im Rahmen der vorliegenden Anmeldung unter einem Crash-Szenario ein Frontalcrash, ein Heckcrash, ein Seitencrash und/oder ein Pfahlcrash zu verstehen. Insbesondere entspricht das Crash-Szenario den Anforderungen an einen Crashtest, insbesondere nach Euro NCAP.

Insbesondere entsprechen im Rahmen der vorliegenden Anmeldung verwendete X-, Y-und/oder Z-Richtungen den Angaben eines üblichen Fahrzeugkoordinatensystems. Hierbei kann die X-Richtung der Fahrzeuglängsachse, die Y-Richtung der Fahrzeugquerachse und die Z-Richtung der Fahrzeughochachse entsprechen.

Vorzugsweise weist der Träger eine vorgegebene Steifigkeit auf. Die vorgegebene Steifigkeit kann sich auf eine vorgegebene Temperatur, insbesondere eine Raumtemperatur und/oder Umgebungstemperatur, beziehen. Beispielsweise kann der Träger eine vorgegebene Steifigkeit bei einer Raumtemperatur und/oder Umgebungstemperatur von 23°C aufweisen. Die Steifigkeit kann im Bereich von 5.000 N/mm bis 30.000 N/mm liegen.

Das Halteelement weist einen vorgegebenen Crash-Dehnbereich auf. Mittels des Crash-Dehnbereichs kann das Halteelement in einem bestimmten Bereich bzw. Abschnitt des Halteelementes im Falle eines Crashs bzw. Unfalls gedehnt werden. Somit kann der Crash-Dehnbereich einen vorgegebenen und/oder begrenzten Crashweg oder Dehnweg für das Halteelement bereitstellen. Hierdurch kann im Falle eines Crash-Szenarios aufgrund des Dehnens des Halteelementes im Crash-Dehnbereich Energie aufgenommen bzw. absorbiert werden. Insbesondere ist der Crash-Dehnbereich auf einen vorgegebenen Abschnitt des Halteelementes beschränkt. Somit weist lediglich ein Teilbereich des Halteelementes den Crash-Dehnbereich auf. Hierbei kann das gesamte Halteelement in dem Crash-Szenario zusätzliche Energie durch Verformung des Halteelementes aufnehmen bzw. absorbieren. Vorzugsweise werden die Anforderungen an die Steifigkeit bereits aufgrund der Grundstruktur aus Kunststoff erfüllt. Die Anforderungen an das Crash-Verhalten des Trägers, insbesondere bezüglich einer Auslenkung in ± X-Richtung, können mittels des Halteelements aus Metall erfüllt werden. Somit kann der Träger als ein Hybridbauteil aus Kunststoff und Metall realisiert werden. Mittels des Halteelementes aus Metall, insbesondere mittels des Crash-Dehnbereichs, ist ein unerwünschtes oder unkontrolliertes Brechen des Trägers vermeidbar. Damit kann die Fahrzeugeinrichtung auch in dem Crash-Szenario hinreichend sicher an dem Träger gehalten werden. Ein unkontrolliertes Lösen der Fahrzeugeinrichtung von dem Träger ist, insbesondere im Rahmen vorgegebener Anforderungen an ein Crash-Verhalten, vermeidbar.

Gemäß einer Weiterbildung erstreckt sich das Halteelement zwischen der Anbindungsstelle und einem Befestigungsbereich zum Befestigen des Halteelementes an dem Träger. Im Befestigungsbereich kann das Halteelement kraftschlüssig, stoffschlüssig und/oder formschlüssig mit der Grundstruktur verbunden sein. Das Halteelement kann einen Befestigungsabschnitt aufweisen. Der Befestigungsabschnitt kann dem Befestigungsbereich zugeordnet sein. Des Weiteren kann das Halteelement einen Überbrückungsabschnitt aufweisen. Der Überbrückungsabschnitt kann sich ausgehend von dem Befestigungsabschnitt in Richtung der Anbindungsstelle erstrecken. Im Bereich der Anbindungsstelle kann das Halteelement einen Halteabschnitt aufweisen. Der Halteabschnitt kann zum Halten und/oder teilweisen Aufnehmen der Fahrzeugeinrichtung ausgebildet sein. Vorzugsweise ist der Überbrückungsabschnitt zwischen dem Befestigungsabschnitt und dem Halteabschnitt angeordnet.

Insbesondere ist der Befestigungsbereich an einer Seite und/oder in einem Seitenbereich des Trägers angeordnet. Somit kann sich das Halteelement von einer Seite des Trägers nach innen und/oder im Wesentlichen in Richtung eines Zentrums des Trägers erstrecken. Des Weiteren kann der Befestigungsbereich zwischen sich in Längsrichtung des Trägers erstreckenden Randbereichen angeordnet sein. Vorzugsweise ist die Anbindungsstelle zwischen den sich in Längsrichtung des Trägers erstreckenden Randbereichen angeordnet. Der Träger kann somit zwei voneinander abgewandte Seiten sowie zwei voneinander abgewandte Randbereiche aufweisen. Hierbei können sich die Seiten des Trägers quer zur Längserstreckung des Trägers bzw. der Randbereiche des Trägers erstrecken. Insbesondere sind die Seiten und/oder Randbereiche Bestandteil der Grundstruktur. Die Seiten und/oder Randbereiche können profilartig ausgebildet sein. Vorzugsweise ist das Halteelement von dem Befestigungsbereich in Richtung der Anbindungsstelle geneigt ausgerichtet. Insbesondere ist der Überbrückungsabschnitt des Halteelementes ausgehend von dem Befestigungsabschnitt des Halteelementes in Richtung des Halteelementes und/oder des Crash-Dehnbereichs geneigt. Das Halteelement kann schräg zur Längserstreckung des Trägers ausgerichtet sein. Somit kann mindestens ein Abschnitt des Halteelementes quer und/oder schräg zu einer Ebene des Trägers und/oder der Grundstruktur angeordnet sein. Hierbei kann sich die Ebene des Trägers und/oder der Grundstruktur rechtwinklig zu mindestens einer Seite und/oder mindestens einem Randbereich der Grundstruktur erstrecken. Die Seite und/oder der Randbereich kann profilartig ausgebildet sein. Vorzugsweise erstreckt sich die mindestens eine Seite und/oder der mindestens eine Randbereich quer, insbesondere rechtwinklig, zu einer Ebene bzw. Hauptebene des Trägers und/oder der Grundstruktur.

Vorzugsweise ist der Crash-Dehnbereich in einem der Anbindungsstelle zugewandten und/oder benachbarten Abschnitt des Halteelementes angeordnet. In einem Crash-Szenario wirken im Bereich der Anbindungsstelle große Kräfte von der mit dem Träger verbundenen Fahrzeugeinrichtung auf den Träger. Aufgrund der Anordnung des Crash-Dehnbereichs in unmittelbarer Nähe der Anbindungsstelle bzw. im Bereich der Anbindungsstelle können diese Kräfte effektiv von dem Crash-Dehnbereich aufgenommen werden. Insbesondere erfolgt in einem Crash-Szenario im Wesentlichen zunächst eine Dehnung des Halteelementes im Crash-Dehnbereich. Vorzugsweise erst nach Ausschöpfung des mittels des Crash-Dehnbereichs bereitgestellten Dehnweges und/oder Crashweges erfolgt in einem Crash-Szenario eine Verformung des Halteelementes. Insbesondere ist der Crash-Dehnbereich in einem Abschnitt zwischen der Anbindungsstelle und dem Befestigungsbereich angeordnet. Hierbei kann der Crash-Dehnbereich in einem der Anbindungsstelle zugewandten Abschnitt des Halteelementes sein. Insbesondere ist der Crash-Dehnbereich zwischen einem Überbrückungsabschnitt und einem Halteabschnitt des Halteelementes angeordnet.

Der Crash-Dehnbereich weist mindestens eine Auswölbung oder mehrere Auswölbungen zum Bereitstellen eines Materialreservoirs auf. Die mindestens eine Auswölbung oder die mehreren Auswölbungen ist bzw. sind zum Dehnen des Halteelementes in dem Crash-Szenario ausgebildet. Mittels einer Auswölbung lässt sich auf einfache Weise ein Materialreservoir realisieren, das zum Dehnen bzw. zum Realisieren eines Dehnweges und/oder Crashweges des Halteelementes in dem Crash-Szenario nutzbar ist. Die Auswölbung kann als eine Umformung und/oder als ein Wulst ausgebildet sein. Insbesondere erstreckt sich die Auswölbung über die gesamte Breite des Halteelementes.

Gemäß einer Weiterbildung ist vorgesehen, dass sich die mindestens eine Auswölbung bezüglich seines Querschnitts quer zur Längsrichtung des Trägers und/oder des Halteelementes erstreckt und/oder auswölbt. Insbesondere erstreckt sich die mindestens eine Auswölbung quer und/oder rechtwinklig zu einer Ebene oder Hauptebene des Trägers und/oder der Grundstruktur. Vorzugsweise ergibt sich die Längsrichtung des Trägers von einer ersten Seite des Trägers in Richtung einer von der ersten Seite abgewandten oder gegenüberliegenden zweiten Seite des Trägers. Eine Längsrichtung des Halteelementes kann sich von dem Befestigungsbereich in Richtung der Anbindungsstelle bzw. umgekehrt ergeben. Insbesondere erstreckt sich die mindestens eine Auswölbung rechtwinklig zur Längsrichtung des Trägers und/oder des Halteelementes.

Die Längsrichtung des Trägers und/oder des Halteelementes können mindestens im Wesentlichen parallel zueinander ausgerichtet sein. Die Auswölbung kann im Querschnitt U-förmig, C-förmig, S-förmig, mäanderartig und/oder als eine Materialstauchung ausgebildet sein. Eine derartige Gestaltung der Auswölbung ist leicht herstellbar und stellt ein Materialreservoir des Halteelementes bereit, das eine Dehnung des Halteelementes in dem Crash-Szenario ermöglicht. Im Falle des Crash-Szenarios kann die Auswölbung im Wesentlichen strangartig gedehnt werden. Je größer die Auswölbung ausgebildet ist, desto größer kann ein Dehnweg bzw. Crashweg des Halteelementes sein. Vorzugsweise erstreckt sich die mindestens eine Auswölbung im Wesentlichen von einem ersten sich in Längsrichtung des Trägers erstreckenden Randbereich zu einem zweiten sich in Längsrichtung des Trägers erstreckenden Randbereich. Somit kann die mindestens eine Auswölbung quer oder rechtwinklig zwischen zwei Randbereichen des Trägers und/oder der Grundstruktur ausgerichtet sein.

Vorzugsweise ist das Halteelement als ein Blechteil ausgebildet. Ein derartiges Halteelement lässt sich kostengünstig herstellen. Insbesondere lässt sich ein derartiges Halteelement ausstanzen und/oder kaltumformen. Insbesondere kann das Halteelement aus einem Stahlblech hergestellt sein.

Nach einer weiteren Ausführungsform weist die Anbindungsstelle eine Befestigungsöffnung zum Anordnen oder mindestens teilweisen Aufnehmen der Fahrzeugeinrichtung auf. Somit kann die Fahrzeugeinrichtung zumindest teilweise zum Befestigen an dem Träger in die Befestigungsöffnung eingeführt werden. Insbesondere weist das Halteelement im Bereich der Anbindungsstelle ein die Befestigungsöffnung ringartig oder hülsenartig umgebendes Ende und/oder einen entsprechend gestalteten Halteabschnitt auf. Somit ist eine Halterung der Fahrzeugeinrichtung in einer montierten Position mindestens teilweise von dem Halteelement umgeben. Vorzugsweise weist die Fahrzeugeinrichtung mehrere Halterungen zum Anordnen der Fahrzeugeinrichtung an dem Träger auf. Hierdurch können in dem Crash-Szenario von der Fahrzeugeinrichtung auf den Träger und/oder das Halteelement wirkende Kräfte besonders gut aufgenommen und/oder weitergeleitet werden. Vorzugsweise ist in der Befestigungsöffnung und/oder in dem ringartigen oder hülsenartigen Ende, insbesondere in dem Halteabschnitt des Halteelementes, eine Hülse angeordnet. Beispielsweise kann die Hülse in die Befestigungsöffnung eingepresst sein. Des Weiteren kann die Hülse aus einem Metall hergestellt sein. Die Verwendung einer solchen Hülse in Kombination mit einer Grundstruktur aus Kunststoff ermöglicht eine effektive, zuverlässige und dauerhafte Einleitung von Kräften. Die Fahrzeugeinrichtung bzw. Halterung der Fahrzeugeinrichtung ist zum Halten der Fahrzeugeinrichtung an dem Träger in die Hülse aufnehmbar oder einpressbar.

Gemäß einer Weiterbildung weist der Träger eine erste Anbindungsstelle und eine weitere Anbindungsstelle auf. Die weitere Anbindungsstelle kann eine zweite Anbindungsstelle sein. Der ersten Anbindungsstelle kann ein erstes Halteelement und der weiteren Anbindungsstelle ein weiteres oder zweites Halteelement zugeordnet sein. Insbesondere erstreckt sich ein erstes Halteelement von der ersten Anbindungsstelle in Richtung einer ersten Seite der Grundstruktur. Das weitere Halteelement kann sich von der weiteren Anbindungsstelle in Richtung einer von der ersten Seite abgewandten zweiten Seite der Grundstruktur erstrecken. Zwischen den beiden Anbindungsstellen kann eine Ausnehmung in der Grundstruktur angeordnet sein. Die Ausnehmung kann im Wesentlichen mittig in der Grundstruktur angeordnet sein. Das erste Halteelement und/oder das weitere Halteelement können ausgehend von der jeweiligen Anbindungsstelle und von der Ausnehmung weg in Richtung der jeweiligen, insbesondere nächstliegenden, Seite der Grundstruktur gerichtet sein. Die Ausnehmung ist zum mindestens teilweisen Aufnehmen und/oder Durchführen der Fahrzeugeinrichtung oder einer weiteren oder separaten Fahrzeugeinheit ausgebildet. Die Fahrzeugeinheit kann beispielsweise als ein Getriebestrang, Getriebetunnel, Kardanstrang oder Kardantunnel ausgebildet sein.

Die Grundstruktur kann ein Plattenelement aufweisen. Vorzugsweise erstreckt sich das Plattenelement zwischen zwei voneinander beabstandeten Randbereichen und/oder zwischen zwei voneinander beabstandeten Seiten der Grundstruktur. Insbesondere verbindet das Plattenelement die beiden Randbereiche und/oder die beiden Seiten. Das Plattenelement kann eine Ebene oder Hauptebene der Grundstruktur und/oder des Trägers bestimmen bzw. definieren. In das Plattenelement können Befestigungsöffnungen und/oder eine Ausnehmung eingelassen sein. Des Weiteren kann eine Außenkontur des Plattenelementes mittels der Randbereiche und der Seiten bestimmt sein. Hierbei können sich die Randbereiche und die Seiten quer oder rechtwinklig zur Ebene des Plattenelementes erstrecken. Mittels des Plattenelementes können eine Rückseite und eine Frontseite des Trägeres und/oder der Grundstruktur voneinander getrennt und/oder definiert sein. Das Plattenelement kann einlagig oder mehrlagig ausgebildet sein. Des Weiteren kann das Plattenelement eine plane oder konturierte oder unebene Struktur und/oder Oberfläche aufweisen. Gemäß einer Weiterbildung ist in einem Randbereich der Grundstruktur ein Einlegeelement aus Metall zum Aufnehmen von Kräften in einem Crash-Szenario aufgenommen.

Hierbei ist von Vorteil, dass das Crash-Verhalten des Trägers mittels des Einlegeelementes positiv beeinflussbar ist. Hierbei ist das Einlegeelement insbesondere zum Verformen und/oder Dehnen in einem Crash-Szenario ausgebildet. Die in dem Crash-Szenario auftretenden Kräfte können mindestens teilweise mittels des Einlegeelementes absorbiert werden. Zugleich kann die Ausstattung der Grundstruktur mit mindestens einem zusätzlichen Einlegeelement auf den Randbereich beschränkt werden. Hierdurch ist weiterhin eine gewichtssparende Ausbildung ermöglicht. Aufgrund der Anordnung des Einlegeelementes im Randbereich der Grundstruktur kann in einem Crash-Szenario die mit dem Träger verbundene Fahrzeugeinrichtung innerhalb einer vorgegebenen Krafteinwirkung an dem Träger gehalten werden. Es kann ein einzelnes Einlegeelement oder es können mehrere, vorzugsweise zwei, Einlegeelemente vorhanden sein. Insbesondere kann der Träger und/oder die Fahrzeugeinrichtung mindestens teilweise und/oder in Längsrichtung des Trägers von dem Einlegeelement oder mehreren Einlegeelementen umgeben sein. Hierbei kann das Einlegeelement und/oder können mehrere Einlegeelemente eine zusätzliche Stabilisierungsfunktion und/oder Haltefunktion für den Träger und/oder die Fahrzeugeinrichtung realisieren.

Mittels des Einlegeelementes kann in einem Crash-Szenario eine vorgegebene Verformung und/oder Dehnung des Trägers, insbesondere im Bereich der Anbindungsstelle, realisiert und/oder gewährleistet werden. Hierbei kann ein Versagen, Reißen und/oder Brechen des Trägers, insbesondere im Bereich der Anbindungsstelle, innerhalb der vorgegebenen Krafteinwirkung, des vorgegebenen Verformungsbereichs und/oder Dehnungsbereichs vermieden werden. Insbesondere wird bei einem Brechen des Kunststoffs der Grundstruktur der Träger weiterhin mittels des Einlegeelementes zusammengehalten. Vorzugsweise ist ein Versagen des Trägers in ± X-Richtung für einen vorgegebenen Crashweg und/oder Dehnweg, insbesondere im Bereich der Anbindungsstelle, vermeidbar. Der Crashweg und/oder Dehnweg kann im Bereich bis zu 50 mm oder bis zu 300 mm liegen. Hierbei kann der Crashweg und/oder Dehnweg mit einer Verformung und/oder Dehnung des Trägers, der Grundstruktur und/oder des Einlegeelementes realisiert sein.

Gemäß einer Weiterbildung ist das Einlegeelement in den Randbereich der Grundstruktur integriert. Somit kann das Einlegeelement als ein funktionaler und/oder konstruktiver Bestandteil der Grundstruktur ausgebildet sein. Vorzugsweise ist das Einlegeelement von dem Kunststoff der Grundstruktur teilweise oder vollständig umgeben. Somit kann das Einlegeelement innerhalb des Randbereichs der Grundstruktur aufgenommen sein. Hierbei kann das Einlegeelement positionsfest in Bezug zu der Grundstruktur gehalten sein. Insbesondere ist das Einlegeelement mit dem Kunststoff der Grundstruktur umspritzt. Dies ermöglicht eine vergleichsweise einfache und/oder kostengünstige Herstellung.

Vorzugsweise ist das Einlegeelement einteilig und/oder strangartig ausgebildet. Alternativ kann das Einlegeelement aus mehreren Teilen zusammengesetzt sein. Hierbei können die einzelnen Teile stoffschlüssig, formschlüssig und/oder kraftschlüssig miteinander verbunden sein. Insbesondere ist das Einlegeelement in sich steif und/oder als eine in sich steife Struktur ausgebildet. Die Kontur des Einlegeelementes kann der Kontur des Randbereiches angepasst sein. Somit kann die Kontur, die Form und/oder die Gestalt des Einlegeelementes korrespondierend zu der Kontur, Form und/oder Gestalt des Randbereiches ausgebildet sein.

Das Einlegeelement kann als ein Metallband und/oder als ein Metallgurt ausgebildet sein. Hierdurch ist eine strangartige und/oder profilartige Gestaltung des metallenen Einlegeelementes ermöglicht. Insbesondere kann das Einlegeelement aus einem Strangmaterial und/oder Bandmaterial hergestellt werden. Das Einlegeelement kann mehrere Ausnehmungen, Durchbrüche und/oder Löcher aufweisen. Hierdurch ist eine weitere Gerichtsreduzierung ermöglicht. Zudem kann der Kunststoff der Grundstruktur durch die Ausnehmungen, Durchbrüche und/oder Löcher treten, wodurch das Einlegeelement sicher oder ortsfest innerhalb der Grundstruktur gehalten ist. Vorzugsweise ist das Einlegeelement aus einem Blech oder Lochblech oder einer gitterartigen Struktur gebildet. Die Ausnehmungen, Durchbrüche und/oder Löcher können mittels Stanzen in das Einlegeelement eingebracht werden.

Nach einer weiteren Ausführungsform weist das Einlegeelement eine Versteifungsstruktur auf. Mittels der Versteifungsstruktur ist das Einlegeelement und/oder der Träger zusätzlich versteift. Dies führt zu einer weiteren Verbesserung des Crash-Verhaltens des Trägers in einem Crash-Szenario. Die Versteifungsstruktur kann als eine Umformung und/oder Abkantung des Einlegeelementes ausgebildet sein. Eine derartige Umformung und/oder Abkantung ist kostengünstig mit an sich bekannten Techniken herstellbar. Vorzugsweise erstreckt sich die Versteifungsstruktur in Längsrichtung und/oder über die gesamte Länge des Einlegeelementes. Insbesondere erhöht die Versteifungsstruktur die Steifigkeit quer und/oder rechtwinklig zur Längsrichtung des Trägers und/oder des Einlegeelementes.

Vorzugsweise erstreckt sich das Einlegeelement in Längsrichtung des Trägers. In einem in einem Kraftfahrzeug montierten Zustand kann sich das Einlegeelement, die Grundstruktur und/oder der Träger in Y-Richtung erstrecken. Insbesondere erstreckt sich das Einlegeelement von einer ersten Seite der Grundstruktur bis zu einer von der ersten Seite abgewandten zweiten Seite der Grundstruktur. Somit kann sich das Einlegeelement über im Wesentlichen die gesamte Länge des Trägers und/oder der Grundstruktur erstrecken. Der Träger und/oder die Grundstruktur können somit zwei voneinander abgewandte Seiten aufweisen. Hierbei können sich die Seiten des Trägers quer zur Längserstreckung des Trägers und/oder zu zwei Randbereichen des Trägers erstrecken. Insbesondere sind die Seiten und/oder die Randbereiche integraler Bestandteil der Grundstruktur. Die Seiten und/oder Randbereiche können profilartig ausgebildet sein.

Gemäß einer Weiterbildung weist das Einlegeelement an zwei in Längsrichtung voneinander abgewandten Enden jeweils eine Halterung auf. Insbesondere ist die Halterung als ein integraler Bestandteil des Einlegeelementes selbst ausgebildet. Mittels der Halterung ist das Einlegeelement mit einer Halterungsaufnahme und/oder Verbindungseinrichtung verbindbar. Insbesondere ist die Halterungsaufnahme und/oder Verbindungseinrichtung der Grundstruktur zugeordnet und/oder fest mit der Grundstruktur verbunden. Mittels der Halterung ist die Verbindung des Einlegeelementes mit der Grundstruktur weiter verbesserbar. Vorzugsweise umgreift die Halterung die Halterungsaufnahme und/oder Verbindungseinrichtung. Die Halterungsaufnahme und/oder die Verbindungseinrichtung kann eine Verbindungshülse oder -buchse aufweisen. Die Verbindungshülse oder -buchse kann aus Metall gebildet sein. Des Weiteren kann die Verbindungshülse oder -buchse von der Halterung umgriffen werden. Mittels der Halterungsaufnahme und/oder der Verbindungseinrichtung kann der Träger an einer Fahrzeugstruktur eines Kraftfahrzeugs befestigt werden.

Nach einer weiteren Ausführungsform hat die Grundstruktur einen ersten Randbereich mit einem ersten Einlegeelement und einen weiteren oder zweiten Randbereich mit einem weiteren oder zweiten Einlegeelement. Vorzugsweise erstrecken sich der ersten Randbereich und der zweite Randbereich in Längsrichtung des Trägers. Somit können sich auch das erste Einlegeelement und das zweite Einlegeelement in Längsrichtung des Trägers und/oder der Grundstruktur erstrecken. Insbesondere erstreckt sich eine erste Seite der Grundstruktur und eine von der ersten Seite abgewandte zweite Seite der Grundstruktur zwischen und/oder quer zu den beiden Randbereichen. Die beiden Einlegeelemente können somit mittels der beiden Seiten voneinander beabstandet sein. Die beiden Randbereiche können mittels der beiden Seiten miteinander verbunden sein. Im Rahmen der vorliegenden Anmeldung kann eine Seite als ein Seitenbereich und/oder können die beiden Seiten als Seitenbereiche ausgebildet oder aufgefasst werden.

Des Weiteren kann die Grundstruktur aus einem faserverstärkten Kunststoff ausgebildet sein. Für einen entsprechend faserverstärkten Kunststoff können Fasern aus beispielsweise Glas oder Kohlenstoff eingesetzt werden. Die Fasern können als Kurzfasern, Langfasern oder Endlosfasern ausgebildet sein.

Der Träger kann als ein Längsträger oder Querträger ausgebildet sein. Vorzugsweise ist der Träger als ein Querträger realisiert. Somit kann der Träger in einem Kraftfahrzeug quer, insbesondere rechtwinklig, zur Längsrichtung des Kraftfahrzeugs bzw. zur X-Richtung angeordnet sein. Insbesondere ist der Träger in Y-Richtung angeordnet. Der Träger oder Querträger kann zum Lagern einer als Achsgetriebe und/oder Hinterachsgetriebe ausgebildeten Fahrzeugeinrichtung realisiert sein. Hierbei ist die Fahrzeugeinrichtung, insbesondere das Achsgetriebe, mittels der mindestens einen Anbindungsstelle an dem Träger befestigt und/oder gehalten. Der Träger kann ein Bestandteil eines Fahrzeugrahmens sein.

In einem Crash-Szenario drängt die mit dem Träger verbundene Fahrzeugeinrichtung aufgrund der wirkenden Trägheitskräfte in Richtung der ursprünglichen Bewegungsrichtung. Die hierbei auftretenden Kräfte werden mindestens teilweise mittels des mindestens einen Einlegeelementes und/oder mindestens einen Halteelementes aufgenommen. Hierbei wird das Halteelement in dem Crash-Dehnbereich aufgrund der wirkenden Kräfte gedehnt. Des Weiteren kann zusätzlich oder hieran anschließend eine Verformung des Halteelementes und/oder des Einlegeelementes erfolgen. Sowohl durch das Dehnen im Crash-Dehnbereich als auch aufgrund der Verformbarkeit des Halteelementes und/oder des Einlegeelementes können hinreichende Kräfte im Crash-Szenario von dem Träger aufgenommen werden, wobei ein Bruch des Trägers und/oder der Grundstruktur mindestens im Rahmen vorgegebener Anforderungen oder Grenzwerte vermeidbar ist. Mittels des Einlegeelementes und/oder des Halteelementes ist in unkontrolliertes Brechen des Trägers vermeidbar. Zwar kann der Kunststoff der Grundstruktur, insbesondere in einem mittigen Bereich und/oder im Bereich einer oder mehrerer Verbindungseinrichtungen und/oder Befestigungshülsen, brechen. Jedoch kann der Träger mittels des Einlegeelementes und/oder des Halteelementes zusammengehalten werden. Hierdurch kann die Gefahr eines Ablösens von beispielsweise scharfkantigen Teilen der Grundstruktur aus Kunststoff ausgeschlossen oder erheblich reduziert werden. Insbesondere ist das Risiko einer Beschädigung oder eines Aufschlitzens eines Tanks aufgrund eines gebrochenen Trägers vermeidbar.

Mittels des Halteelementes und/oder des Einlegeelementes kann in einem Crash-Szenario eine vorgegebene Verformung und/oder Dehnung des Trägers, insbesondere im Bereich der Anbindungsstelle, realisiert und/oder gewährleistet werden. Hierbei kann ein Versagen, Reißen und/oder Brechen des Trägers, insbesondere im Bereich der Anbindungsstelle, innerhalb des vorgegebenen Verformungsbereichs und/oder Dehnungsbereichs vermieden werden. Vorzugsweise ist ein Versagen des Trägers in ± X-Richtung für einen vorgegebenen Crashweg und/oder Dehnweg, insbesondere im Bereich der Anbindungsstelle, vermeidbar.

Hierbei ist im Vergleich zu üblichen Trägern, insbesondere zu einem Träger aus Aluminium, eine Gewichtsreduzierung im Bereich von bis zu 25 % erreichbar.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine perspektivische Ansicht eines erfindungsgemäßen Trägers,
- Fig. 2: einen Ausschnitt aus einem Querschnitt des erfindungsgemäßen Trägers gemäß Fig. 1.
- Fig. 3: eine perspektivische Ansicht eines weiteren erfindungsgemäßen Trägers,
- Fig. 4: eine perspektivische Ansicht von zwei Einlegeelementen für den erfindungsgemäßen Träger gemäß Fig. 1, und
- Fig. 5: eine perspektivische Ansicht von zwei alternativen Einlegeelementen für einen alternativen erfindungsgemäßen Träger.

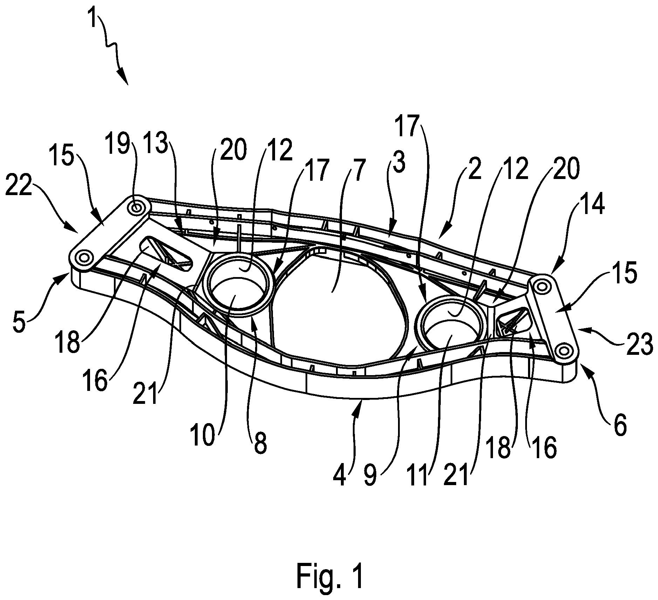

Figur 1 zeigt eine perspektivische Ansicht eines erfindungsgemäßen Trägers 1. Der Träger 1 ist zum Lagern bzw. Halten einer hier nicht näher dargestellten Fahrzeugeinrichtung, wie beispielsweise eines Hinterachsgetriebes, ausgebildet. Bei diesem Ausführungsbeispiel ist der Träger 1 als ein Querträger zur Verwendung in einem Kraftfahrzeug ausgebildet.

Der Träger 100 weist eine Grundstruktur 2 auf. Die Grundstruktur 2 ist aus einem faserverstärkten Kunststoff gebildet. Die Grundstruktur 2 hat einen ersten Randbereich 3 und einen zweiten Randbereich 4. Die beiden Randbereiche 3, 4 erstrecken sich im Wesentlichen in Längsrichtung des Trägers 1 bzw. der Grundstruktur 2. In einem in einem Kraftfahrzeug montierten Zustand ist der Träger 1 bzw. sind die Randbereiche 3, 4 quer zur Fahrzeuglängsachse angeordnet. Hierbei kann der Randbereich 3 unterhalb des Randbereiches 4 angeordnet sind. Somit kann der Randbereich 3 als ein unterer Randbereich 3 und der Randbereich 4 als ein oberer Randbereich 4 ausgebildet sein. Darüber hinaus hat die Grundstruktur 2 eine erste Seite 5 und eine zweite Seite 6. Die beiden Seiten 5, 6 sind als Seitenbereiche der Grundstruktur 2 aufzufassen und erstrecken sich quer zur Längserstreckung der Grundstruktur 2 bzw. der beiden Randbereiche 3, 4. In einem montierten Zustand kann in X-Richtung des Kraftfahrzeugs gesehen die Seite 5 als eine rechte Seite 5 und die Seite 6 als eine linke Seite 6 ausgebildet sein. Die Randbereiche 3, 4 und die Seiten 5, 6 bestimmen die Außenkontur der Grundstruktur 2 und des Trägers 1.

In einem mittleren Bereich der Grundstruktur 2 weist diese eine Ausnehmung 7 auf. Hier erstreckt sich die Ausnehmung 7 beispielhaft von dem ersten Randbereich 3 bis zum zweiten Randbereich 4. In einer alternativen Ausführungsform kann die Ausnehmung 7 einen kleineren Durchmesser aufweisen. Die Ausnehmung 7 ist zum mindestens teilweisen Aufnehmen und/oder Durchführen einer hier nicht näher dargestellten Fahrzeugeinheit ausgebildet. Die Fahrzeugeinheit kann beispielsweise als ein Kardantunnel ausgebildet sein. Die Kontur der Ausnehmung 7 ist der Außenkontur der Fahrzeugeinheit angepasst.

Der Träger 1 hat eine erste Anbindungsstelle 8 und eine zweite Anbindungsstelle 9. Die beiden Anbindungsstellen 8, 9 sind zum Anordnen bzw. Halten einer hier nicht näher dargestellten Fahrzeugeinrichtung an dem Träger 1 ausgebildet. Die Fahrzeugeinrichtung kann beispielsweise als ein Achsgetriebe oder ein Hinterachsgetriebe ausgebildet sein. Insoweit kann zwischen einer Fahrzeugeinrichtung, die an dem Träger 1 gelagert, befestigt oder gehalten ist, und einer Fahrzeugeinheit, die durch die Ausnehmung 7 geführt, aber nicht an dem Träger 1 gelagert, befestigt oder gehalten ist, unterschieden werden. Die Anbindungsstellen 8, 9 weisen jeweils eine Befestigungsöffnung 10 bzw. 11 auf.

Darüber hinaus ist zusätzlich in die Befestigungsöffnung 10 bzw. 11 jeweils eine Hülse 12 aufgenommen. Die Hülse 12 ist bei diesem Ausführungsbeispiel aus Metall ausgebildet und in die Befestigungsöffnung 10 bzw. 11 beispielsweise eingepresst.

Des Weiteren weist der Träger 1 ein erstes Halteelement 13 und ein weiteres bzw. zweites Halteelement 14 auf. Die Halteelemente 13, 14 sind aus Metall ausgebildet. Im Einzelnen sind die Halteelemente 13, 14 aus einem Stahlblech hergestellt. Das erste Halteelement 13 und das zweite Halteelement 14 sind im Wesentlichen gleichartig aufgebaut. Bei dieser Ausführungsform sind die beiden Halteelemente 13, 14 spiegelsymmetrisch zueinander angeordnet. Die beiden Halteelemente 13, 14 weisen jeweils einen Befestigungsabschnitt 15, einen Überbrückungsabschnitt 16 und einen Halteabschnitt 17 auf. Der Halteabschnitt 17 ist jeweils als ein die Befestigungsöffnung 10 bzw. 11 ringartig umgebendes Ende des Halteelementes 13 bzw. 14 ausgebildet. Ausgehend von dem Halteabschnitt 17 erstreckt sich der Überbrückungsabschnitt 16 jeweils in Richtung des zugehörigen Befestigungsabschnitts 15. Bei diesem Ausführungsbeispiel ist der Überbrückungsabschnitt 16 des ersten Halteelementes 13 länger ausgebildet als der Überbrückungsabschnitt 16 des zweiten Halteelementes 14. Des Weiteren sind bei diesem Beispiel die Überbrückungsabschnitte 16 als eine Art Doppelsteg ausgebildet. Zur Ausbildung des Doppelstegs in dem Überbrückungsabschnitt 16 weist dieser jeweils eine Öffnung 18 auf. Mittels der Öffnung 18 lässt sich Material einsparen und Gewicht reduzieren.

Der Befestigungsabschnitt 15 des ersten Halteelementes 13 ist in einem Befestigungsbereich 22 der Seite 5 des Trägers 1 mit der Grundstruktur 2 verbunden. Der Befestigungsabschnitt 15 des zweiten Halteelementes 14 ist in einem Befestigungsbereich 23 der Seite 6 des Trägers 1 mit der Grundstruktur 2 verbunden. Bei diesem Ausführungsbeispiel ist der Befestigungsabschnitt 15 jeweils durch das Einpressen von Befestigungshülsen 19 an der Grundstruktur 2 gehalten bzw. an dieser befestigt. Alternativ kann der Befestigungsabschnitt 15 mit der Grundstruktur 2 im Befestigungsbereich 23 verschraubt sein. Für eine bessere Übersichtlichkeit sind nicht sämtliche Befestigungshülsen 19 mit einem Bezugszeichen versehen.

Das erste Halteelement 13 und das zweite Halteelement 14 weist jeweils einen Crash-Dehnbereich 20 auf. Der Crash-Dehnbereich 20 ist jeweils zwischen dem Überbrückungsabschnitt 16 und dem Halteabschnitt 17 angeordnet. Somit ist der Crash-Dehnbereich 20 auf einen vorgegebenen Abschnitt des Halteelementes 13 bzw. 14 beschränkt. Der Crash-Dehnbereich 20 ermöglicht ein definierbares Dehnen des Halteelementes 13 bzw. 14 in einem Crash-Szenario, insbesondere einem Frontalcrash und/oder Heckcrash eines mit dem Träger 1 ausgestatteten Kraftfahrzeugs. Des Weiteren ist der Crash-Dehnbereich 20 unmittelbar benachbart zur Anbindungsstelle 8 bzw. 9 angeordnet. Der Crash-Dehnbereich 20 weist eine Auswölbung 21 auf.

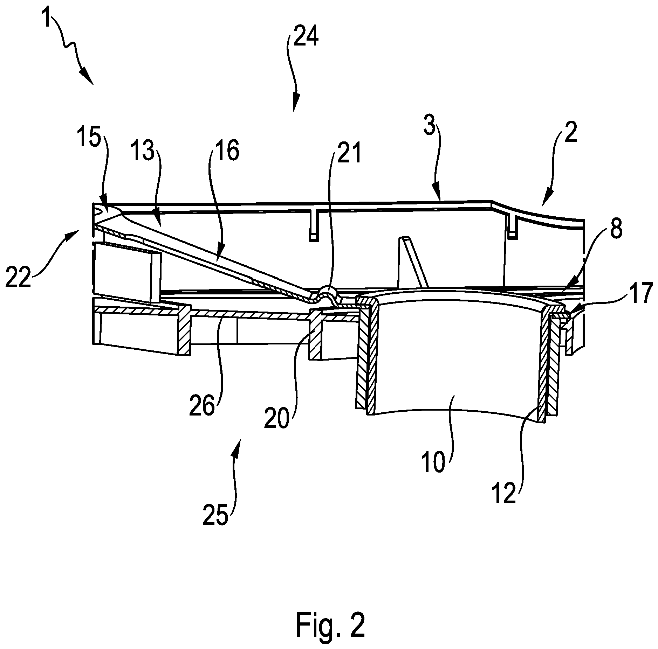

Figur 2 zeigt einen Ausschnitt aus einem Querschnitt des erfindungsgemäßen Trägers 1 gemäß Figur 1. Gezeigt ist ein Ausschnitt im Bereich der ersten Anbindungsstelle 8 bzw. des ersten Halteelementes 13. Die Auswölbung 21 erstreckt sich bezüglich seines Querschnitts quer zur Längsrichtung des Trägers 1 bzw. des Halteelementes 13. Bei diesem Ausführungsbeispiel ist die Auswölbung 21 als eine Art Wulst ausgebildet, die sich ausgehend von dem Halteelement 13 auswölbt.

Der Träger 1 weist eine Rückseite 24 und eine Frontseite 25 auf. Des Weiteren hat die Grundstruktur 2 ein Plattenelement 26. Das Plattenelement 26 bestimmt eine Ebene oder Hauptebene der Grundstruktur 2 bzw. des Trägers 1. In das Plattenelement 26 sind die Befestigungsöffnungen 10, 11 und die Ausnehmung 7 eingelassen. Des Weiteren ist eine Außenkontur des Plattenelementes 26 mittels der Randbereiche 3, 4 und der Seiten 5, 6 bestimmt. Hierbei erstrecken sich die Randbereiche 3, 4 und die Seiten 5, 6 quer oder rechtwinklig zur Ebene des Plattenelementes 26. Mittels des Plattenelementes 26 sind die Rückseite 24 und die Frontseite 25 voneinander getrennt und/oder definiert.

Bei diesem Ausführungsbeispiel ist das Halteelement 13 im Bereich der Rückseite 24 angeordnet. Des Weiteren erstreckt sich die Auswölbung 21 bei diesem Beispiel ausgehend von dem Halteelement 13 von dem Plattenelement 25 weg. Insbesondere ist die Auswölbung nach außen gewölbt. Hier ist die Auswölbung 21 beispielhaft im Querschnitt C-förmig ausgebildet. Alternativ sind andere Querschnittsformen, beispielsweise U-förmig, S-förmig oder mäanderartig denkbar. Wesentlich ist, dass der Crash-Dehnbereich 20 aufgrund der Auswölbung 21 ein Materialreservoir bereitstellt. Dieses Materialreservoir bzw. die Auswölbung 21 kann in einem Crash-Szenario genutzt werden, um eine definierbare Dehnung des Halteelementes 13 im Bereich des Crash-Dehnbereiches 20 zu ermöglichen.

Des Weiteren ist erkennbar, dass der Überbrückungsabschnitt 16 zwischen dem Befestigungsabschnitt 15 und dem Crash-Dehnbereich 20 bzw. dem Halteabschnitt 17 schräg zur Längserstreckung des Trägers 1 bzw. des Randbereiches 3 ausgerichtet ist. Hierbei ist der Überbrückungsabschnitt 16 ausgehend von dem Befestigungsabschnitt 15 in Richtung der Rückseite 24 und/oder des Plattenelementes 26 geneigt. Des Weiteren ist das Halteelement 13 ausgehend von dem Befestigungsabschnitt 22 bzw. das Halteelement 14 ausgehend von dem Befestigungsabschnitt 23 in Richtung eines Zentrums und/oder der Ausnehmung 7 des Trägers 1 ausgerichtet.

Die vorstehenden Erläuterungen im Zusammenhang mit dem ersten Halteelement 13 gelten analog auch für das zweite Halteelement 14.

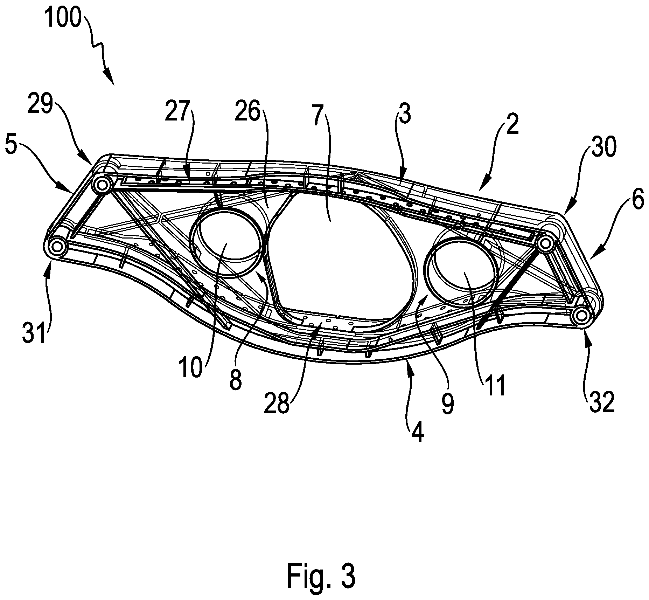

Figur 3 zeigt eine perspektivische Ansicht eines weiteren erfindungsgemäßen Trägers 100. Der Träger 100 entspricht weitgehend dem Träger 1 gemäß den Figuren 1 und 2. Insoweit wird auch auf die vorangegangene Beschreibung verwiesen. Der Träger 100 weist ebenfalls die Halteelemente 13, 14 auf, die hier für eine bessere Übersichtlichkeit jedoch nicht dargestellt bzw. weggelassen wurden.

Der Träger 100 weist ein erstes Einlegeelement 27 und ein weiteres bzw. zweites Einlegeelement 28 auf. Das erste Einlegeelement 27 ist in dem Randbereich 3 der Grundstruktur 2 und das zweite Einlegeelement 28 in dem Randbereich 4 der Grundstruktur 2 aufgenommen. Hierbei dienen die Einlegeelemente 27, 28 zum Aufnehmen bzw. Absorbieren von Kräften in einem Crash-Szenario.

Die Einlegeelemente 27, 28 sind jeweils einstückig und aus Metall ausgebildet, um die Steifigkeit des Trägers 100 zu erhöhen. Im Einzelnen sind die Einlegeelemente 27, 28 als Blechbänder bzw. Blechgurte ausgebildet. Die Kontur des Einlegeelementes 27 bzw. 28 ist an die Kontur des jeweiligen Randbereiches 3 bzw. 4 angepasst.

Die Einlegeelemente 27, 28 sind von dem Kunststoff der Grundstruktur 2 mindestens weitgehend oder vollständig umschlossen bzw. umspritzt. Des Weiteren erstrecken sich die Einlegeelemente 27, 28 von der ersten Seite 5 der Grundstruktur 2 in Längsrichtung des Trägers 100 in Richtung der zweiten Seite 6 der Grundstruktur 2.

Ein erstes Ende des ersten Einlegeelementes 27 ist mit einer ersten Verbindungseinrichtung 29 des Trägers 100 verbunden. Hierbei ist die erste Verbindungseinrichtung 29 der ersten Seite 5 zugeordnet. Ein von dem ersten Ende abgewandtes zweites Ende des Einlegeelementes 27 ist mit einer zweiten Verbindungseinrichtung 30 verbunden. Die zweite Verbindungseinrichtung 30 ist der zweiten Seite 6 zugeordnet.

Entsprechend ist ein erstes Ende des zweiten Einlegeelementes 28 ist mit einer dritten Verbindungseinrichtung 31 des Trägers 100 verbunden. Hierbei ist die dritte Verbindungseinrichtung 31 der ersten Seite 5 zugeordnet. Ein von dem ersten Ende abgewandtes zweites Ende des Einlegeelementes 28 ist mit einer vierten Verbindungseinrichtung 32 verbunden. Die vierte Verbindungseinrichtung 32 ist der zweiten Seite 6 zugeordnet.

Mittels der Verbindungseinrichtungen 29, 30, 31, 32 ist der Träger an eine hier nicht näher dargestellte Fahrzeugstruktur eines Kraftfahrzeuges montierbar.

Wie die Randbereiche 3, 4 erstrecken sich auch Bandflächen der Einlegeelemente 27, 28 im Wesentlichen quer, hier nämlich beispielhaft rechtwinklig, zu einer Ebene eines Plattenelementes 26. Weitere Details der Einlegeelemente 27, 28 sind der nachfolgend Figur zu entnehmen.

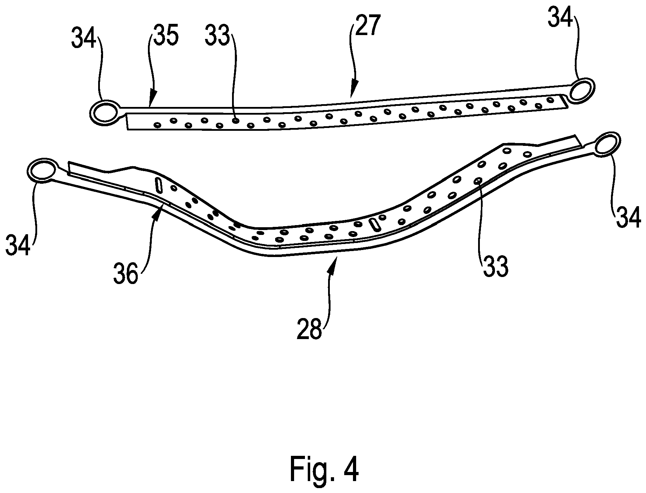

Figur 4 zeigt eine perspektivische Ansicht der beiden Einlegeelemente 27, 28 für den erfindungsgemäßen Träger 100 gemäß Figur 3. Zunächst ist erkennbar, dass die Einlegeelemente 27, 28 eine Vielzahl von Ausnehmungen 33 in der Gestalt von Löchern aufweisen. Hierbei sind für eine bessere Übersichtlichkeit nicht alle Ausnehmungen 33 mit einem Bezugszeichen versehen. Die Ausnehmungen 33 ermöglichen eine Gewichtsreduzierung und gleichzeitig ein Durchdringen der Einlegeelemente 27, 28 mit dem Kunststoff der Grundstruktur 2, wodurch die Einlegeelemente 27, 28 besonders fest innerhalb der Randbereiche 3, 4 befestigt bzw. gehalten sind.

An den beiden in Längsrichtung voneinander abgewandten Enden der Einlegeelemente 27, 28 weisen diese eine jeweils im Wesentlichen gleichartig ausgebildete Halterung 34 auf. Die Halterung 34 ist ringförmig ausgebildet. Die ringförmigen Halterungen 34 dienen zum Anordnen bzw. Befestigen der Einlegeelemente 27, 28 an der jeweiligen Verbindungseinrichtung 29, 30, 31, 32, 33 der Grundstruktur 2 gemäß der vorangegangenen Figur. Dabei umgreift die Halterung 34 jeweils die zugehörige Verbindungseinrichtung 29, 30, 31 bzw. 32. Hierbei kann das Einlegeelement 27 bzw. 28 mittels der Halterungen 34 zwischen den beiden zugehörigen Verbindungseinrichtungen 29, 30 bzw. 31, 32 eingespannt werden.

Des Weiteren haben die Einlegeelemente 27, 28 jeweils eine Versteifungsstruktur 35 bzw. 36. Bei diesem Ausführungsbeispiel ist die Versteifungsstruktur 35 bzw. 36 jeweils als eine Abkantung ausgebildet. Die Versteifungsstruktur 35, 36 bzw. die Abkantung erstreckt sich quer, hier beispielhaft rechtwinklig, zu der Bandfläche des jeweiligen Einlegeelementes 27 bzw. 28. Durch diese Versteifungsstruktur 35, 36 bzw. die Abkantung sind die Einlegeelemente 27, 28 zusätzlich in sich versteift.

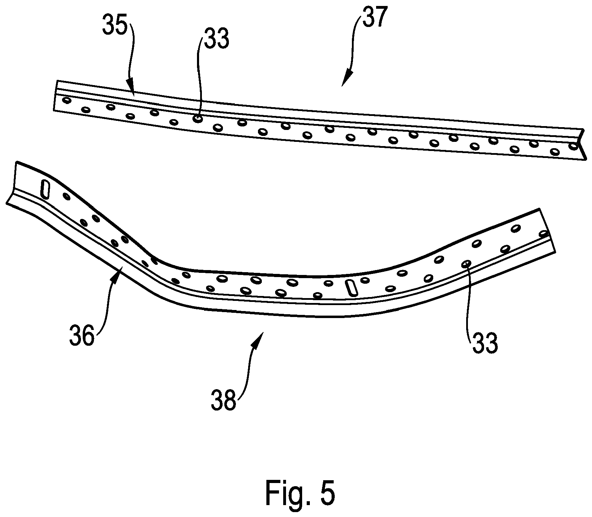

Figur 5 zeigt eine perspektivische Ansicht von zwei alternativen Einlegeelementen 37, 38 für einen alternativen erfindungsgemäßen Träger, der im Wesentlichen wie der Träger 100 bzw. 1 aufgebaut sein kann.

Die Einlegeelemente 37, 38 unterscheiden sich von den Einlegeelementen 27, 28 dadurch, dass den Einlegeelementen 37, 38 die Halterungen 34 fehlen. Hiervon abgesehen stimmen die Einlegeelemente 37, 38 mit den Einlegeelementen 27, 28 überein. Insoweit wird auch auf die vorangegangene Beschreibung verwiesen.

Somit sind die Einlegeelemente 37, 38 nicht mit den Verbindungseinrichtungen 29, 30, 31, 32 verbindbar. Stattdessen werden die Einlegeelemente 37, 38 ausschließlich durch das Umspritzen mit dem Kunststoff der Grundstruktur 2 innerhalb der Randbereiche 3, 4 gehalten. Mittels der Ausnehmungen 37 und die Durchdringung dieser mittels des Kunststoffes der Grundstruktur 2 sind die Einlegeelemente 27, 28 hinreichend fest innerhalb der Randbereiche 3, 4 befestigt bzw. gehalten.

Mittels der Einlegeelemente 27, 28, 37, 38 und/oder den Halteelementen 13, 14 kann selbst bei einem Bruch des Kunststoffs der Grundstruktur 2 der Träger 1, 100 hinreichend zusammengehalten werden. Hierdurch kann ein unkontrolliertes Versagen und/oder Brechen des Trägers 1, 100 vermieden werden.

### Bezugszeichen

- 1, 100: Träger
- 2: Grundstruktur
- 3: erster Randbereich
- 4: zweiter Randbereich
- 5: erste Seite
- 6: zweite Seite
- 7: Ausnehmung
- 8: erste Anbindungsstelle
- 9: zweite Anbindungsstelle
- 10: Befestigungsöffnung
- 11: Befestigungsöffnung
- 12: Hülse
- 13: erstes Halteelement
- 14: zweites Halteelement
- 15: Befestigungsabschnitt
- 16: Überbrückungsabschnitt
- 17: Halteabschnitt
- 18: Öffnung
- 19: Befestigungshülse
- 20: Crash-Dehnbereich
- 21: Auswölbung
- 22: Befestigungsbereich
- 23: Befestigungsbereich
- 24: Rückseite
- 25: Frontseite
- 26: Plattenelement
- 27: Einlegeelement
- 28: Einlegeelement
- 29: Verbindungseinrichtung
- 30: Verbindungseinrichtung
- 31: Verbindungseinrichtung
- 32: Verbindungseinrichtung
- 33: Ausnehmung
- 34: Halterung
- 35: Versteifungsstruktur
- 36: Versteifungsstruktur
- 37: Einlegeelement
- 38: Einlegeelement

## Patentansprüche

1. Träger zum Lagern einer Fahrzeugeinrichtung für ein Kraftfahrzeug, mit einer Grundstruktur (2), wobei die Grundstruktur (2) aus Kunststoff gebildet ist, und mit mindestens einer Anbindungsstelle (8, 9) zum Anordnen der Fahrzeugeinrichtung an dem Träger (1, 100), wobei der Anbindungsstelle (8, 9) ein aus Metall ausgebildetes Halteelement (13, 14) zugeordnet ist, wobei das Halteelement (13, 14) zum Aufnehmen von Kräften in einem Crash-Szenario ausgebildet ist, **dadurch gekennzeichnet, dass** das Halteelement (13, 14) einen vorgegebenen Crash-Dehnbereich (20) aufweist, wobei der Crash-Dehnbereich (20) mindestens eine Auswölbung (21) oder mehrere Auswölbungen zum Bereitstellen eines Materialreservoirs aufweist und die mindestens eine Auswölbung (21) oder die mehreren Auswölbungen zum Dehnen des Halteelementes (13, 14) in dem Crash-Szenario ausgebildet ist bzw. sind.

2. Träger nach Anspruch 1, **dadurch gekennzeichnet, dass** der Crash-Dehnbereich (20) auf einen vorgegebenen Abschnitt des Halteelementes (13, 14) beschränkt ist.

3. Träger nach Anspruch 1 oder 2, **dadurch gekennzeichnet, dass** sich das Halteelement (13, 14) zwischen der Anbindungsstelle (8, 9) und einem Befestigungsbereich (22, 23) zum Befestigen des Halteelementes (13, 14) an dem Träger (1, 100) erstreckt, insbesondere ist der Befestigungsbereich (22, 23) an einer Seite (5, 6) des Trägers (1, 100) und/oder zwischen sich in Längsrichtung des Trägers (1, 100) erstreckenden Randbereichen (3, 4) angeordnet, vorzugsweise ist das Halteelement (13, 14) von dem Befestigungsbereich (22, 23) in Richtung der Anbindungsstelle (8, 9) geneigt und/oder schräg zur Längserstreckung des Trägers (1, 100) ausgerichtet.

4. Träger nach einem der vorhergehenden Ansprüche, **dadurch gekennzeichnet, dass** der Crash-Dehnbereich (20) in einem der Anbindungsstelle (8, 9) zugewandten und/oder benachbarten Abschnitt des Halteelementes (13, 14) angeordnet ist, insbesondere ist der Crash-Dehnbereich (20) in einem Abschnitt zwischen der Anbindungsstelle (8, 9) und dem Befestigungsbereich (22, 23) angeordnet.

5. Träger nach einem der vorhergehenden Ansprüche , **dadurch gekennzeichnet, dass** sich die mindestens eine Auswölbung (21) bezüglich seines Querschnitts quer zur Längsrichtung des Trägers (1, 100) und/oder des Halteelementes (13, 14) erstreckt und/oder auswölbt, insbesondere ist die Auswölbung (21) im Querschnitt U-förmig, C-förmig, S-förmig, mäanderartig und/oder als eine Materialstauchung ausgebildet, vorzugsweise erstreckt sich die mindestens eine Auswölbung (21) in Richtung von einem ersten sich in Längsrichtung des Trägers (1, 100) erstreckenden Randbereich (3) zu einem zweiten sich in Längsrichtung des Trägers (1, 100) erstreckenden Randbereich (4).

6. Träger nach einem der vorhergehenden Ansprüche, **dadurch gekennzeichnet, dass** das Halteelement (13, 14) als ein Blechteil und/oder die Grundstruktur (2) aus einem faserverstärkten Kunststoff ausgebildet ist.

7. Träger nach einem der vorhergehenden Ansprüche, **dadurch gekennzeichnet, dass** der Träger (1, 100) als ein Querträger ausgebildet ist, insbesondere ist der Querträger zum Lagern einer als Hinterachsgetriebe ausgebildeten Fahrzeugeinrichtung realisiert.

8. Träger nach einem der vorhergehenden Ansprüche, **dadurch gekennzeichnet, dass** die Anbindungsstelle (8, 9) eine Befestigungsöffnung (10, 11) zum Anordnen der Fahrzeugeinrichtung aufweist, insbesondere weist das Halteelement (13, 14) im Bereich der Anbindungsstelle (8, 9) ein die Befestigungsöffnung (10, 11) ringartig oder hülsenartig umgebendes Ende auf, vorzugsweise ist in der Befestigungsöffnung (10, 11) und/oder in dem ringartigen oder hülsenartigen Ende eine Hülse (12) angeordnet.

9. Träger nach einem der vorhergehenden Ansprüche, **dadurch gekennzeichnet, dass** eine erste Anbindungsstelle (8) und eine weitere Anbindungsstelle (9) vorhanden sind, insbesondere erstreckt sich ein erstes Halteelement (13) von der ersten Anbindungsstelle (8) in Richtung einer ersten Seite (5) der Grundstruktur (2) und ein weiteres Halteelement (14) von der weiteren Anbindungsstelle (9) in Richtung einer von der ersten Seite (5) abgewandten zweiten Seite (6) der Grundstruktur (2), vorzugsweise ist zwischen den beiden Anbindungsstellen (8, 9) eine Ausnehmung (7) in der Grundstruktur (2) angeordnet.

10. Träger nach einem der vorhergehenden Ansprüche, **dadurch gekennzeichnet, dass** in einem Randbereich (3, 4) der Grundstruktur (2) ein Einlegeelement (27, 28, 37, 38) aus Metall zum Aufnehmen von Kräften in einem Crash-Szenario aufgenommen ist.

## Claims

1. Carrier for mounting a vehicle device for a motor vehicle, with a basic structure (2), the basic structure (2) being formed from plastic, and with at least one attachment point (8, 9) for arranging the vehicle device on the carrier (1, 100), the attachment point (8, 9) being assigned a holding element (13, 14) which is configured from metal, the holding element (13, 14) being configured for absorbing forces in a crash scenario, **characterized in that** the holding element (13, 14) has a predefined crash expansion region (20), the crash expansion region (20) having at least one protuberance (21) or a plurality of protuberances for providing a material reservoir, and the at least one protuberance (21) or the plurality of protuberances being configured for expanding the holding element (13, 14) in the crash scenario.

2. Carrier according to Claim 1, **characterized in that** the crash expansion region (20) is limited to a predefined section of the holding element (13, 14).

3. Carrier according to Claim 1 or 2, **characterized in that** the holding element (13, 14) extends between the attachment point (8, 9) and a fastening region (22, 23) for fastening the holding element (13, 14) to the carrier (1, 100); in particular, the fastening region (22, 23) is arranged on one side (5, 6) of the carrier (1, 100) and/or between edge regions (3, 4) which extend in the longitudinal direction of the carrier (1, 100); the holding element (13, 14) is preferably oriented from the fastening region (22, 23) in the direction of the attachment point (8, 9) in an inclined and/or oblique manner with respect to the longitudinal extent of the carrier (1, 100).

4. Carrier according to one of the preceding claims, **characterized in that** the crash expansion region (20) is arranged in a section of the holding element (13, 14), which section faces and/or adjoins the attachment point (8, 9); in particular, the crash expansion region (20) is arranged in a section between the attachment point (8, 9) and the fastening region (22, 23).

5. Carrier according to one of the preceding claims, **characterized in that** the at least one protuberance (21) extends and/or bulges outwards with regard to its cross section transversely with respect to the longitudinal direction of the carrier (1, 100) and/or the holding element (13, 14); in particular, the protuberance (21) is configured in cross section in a U-shaped, C-shaped, S-shaped or meandering manner and/or as a buckled material portion; the at least one protuberance (21) preferably extends in the direction from a first edge region (3) which extends in the longitudinal direction of the carrier (1, 100) to a second edge region (4) which extends in the longitudinal direction of the carrier (1, 100) .

6. Carrier according to one of the preceding claims, **characterized in that** the holding element (13, 14) is configured as a sheet metal part, and/or the basic material (2) is configured from a fibre-reinforced plastic.

7. Carrier according to one of the preceding claims, **characterized in that** the carrier (1, 100) is configured as a crossmember; in particular, the crossmember is realised for mounting a vehicle device which is configured as a rear axle drive.

8. Carrier according to one of the preceding claims, **characterized in that** the attachment point (8, 9) has a fastening opening (10, 11) for arranging the vehicle device; in particular, in the region of the attachment point (8, 9), the holding element (13, 14) has an end which surrounds the fastening opening (10, 11) in a ring-like or sleeve-like manner; a sleeve (12) is preferably arranged in the fastening opening (10, 11) and/or in the ring-like or sleeve-like end.

9. Carrier according to one of the preceding claims, **characterized in that** there are a first attachment point (8) and a further attachment point (9); in particular, a first holding element (13) extends from the first attachment point (8) in the direction of a first side (5) of the basic structure (2), and a further holding element (14) extends from the further attachment point (9) in the direction of a second side (6) of the basic structure (2), which second side (6) faces away from the first side (5); a recess (7) is preferably arranged in the basic structure (2) between the two attachment points (8, 9).

10. Carrier according to one of the preceding claims, **characterized in that** an insert element (27, 28, 37, 38) made from metal for absorbing forces in a crash scenario is received in an edge region (3, 4) of the basic structure (2).

## Revendications

1. Support pour le montage d'un dispositif de véhicule pour un véhicule à moteur, muni d'une structure de base (2), la structure de base (2) étant formée en matière plastique, et muni d'au moins un emplacement de liaison (8, 9) pour l'agencement du dispositif de véhicule sur le support (1, 100), un élément de retenue (13, 14) configuré en métal étant associé à l'emplacement de liaison (8, 9), l'élément de retenue (13, 14) étant configuré pour l'absorption de forces en cas de collision, **caractérisé en ce que** l'élément de retenue (13, 14) comprend une zone de dilatation de collision prédéterminée (20), la zone de dilatation de collision (20) comprenant au moins un bombement (21) ou plusieurs bombements pour la fourniture d'un réservoir de matériau et l'au moins un bombement (21) ou les plusieurs bombements étant configurés pour la dilatation de l'élément de retenue (13, 14) en cas de collision.

2. Support selon la revendication 1, **caractérisé en ce que** la zone de dilatation de collision (20) est limitée à une section prédéterminée de l'élément de retenue (13, 14).

3. Support selon la revendication 1 ou 2, **caractérisé en ce que** l'élément de retenue (13, 14) s'étend entre l'emplacement de liaison (8, 9) et une zone de fixation (22, 23) pour la fixation de l'élément de retenue (13, 14) sur le support (1, 100), la zone de fixation (22, 23) étant notamment agencée sur un côté (5, 6) du support (1, 100) et/ou entre des zones de bord (3, 4) s'étendant dans la direction longitudinale du support (1, 100), l'élément de retenue (13, 14) étant de préférence orienté depuis la zone de fixation (22, 23) dans la direction de l'emplacement de liaison (8, 9) de manière inclinée et/ou en biais par rapport à l'extension longitudinale du support (1, 100).

4. Support selon l'une quelconque des revendications précédentes, **caractérisé en ce que** la zone de dilatation de collision (20) est agencée dans une section de l'élément de retenue (13, 14) tournée vers et/ou voisine de l'emplacement de liaison (8, 9), la zone de dilatation de collision (20) étant notamment agencée dans une section entre l'emplacement de liaison (8, 9) et la zone de fixation (22, 23).

5. Support selon l'une quelconque des revendications précédentes, **caractérisé en ce que** l'au moins un bombement (21) s'étend et/ou se bombe au regard de sa section transversale perpendiculairement à la direction longitudinale du support (1, 100) et/ou de l'élément de retenue (13, 14), le bombement (21) étant notamment configuré dans la section transversale en forme de U, en forme de C, en forme de S, en méandres et/ou sous la forme d'un tassement de matériau, l'au moins un bombement (21) s'étendant de préférence dans la direction allant depuis une première zone de bord (3) s'étendant dans la direction longitudinale du support (1, 100) jusqu'à une deuxième zone de bord (4) s'étendant dans la direction longitudinale du support (1, 100).

6. Support selon l'une quelconque des revendications précédentes, **caractérisé en ce que** l'élément de retenue (13, 14) est configuré sous la forme d'une pièce en tôle et/ou la structure de base (2) est configurée en une matière plastique renforcée par des fibres.

7. Support selon l'une quelconque des revendications précédentes, **caractérisé en ce que** le support (1, 100) est configuré sous la forme d'un support transversal, le support transversal étant notamment réalisé pour le montage d'un dispositif de véhicule configuré sous la forme d'un différentiel arrière.

8. Support selon l'une quelconque des revendications précédentes, **caractérisé en ce que** l'emplacement de liaison (8, 9) comprend une ouverture de fixation (10, 11) pour l'agencement du dispositif de véhicule, l'élément de retenue (13, 14) comprenant notamment dans la zone de l'emplacement de liaison (8, 9) une extrémité entourant à la façon d'un anneau ou à la façon d'une douille l'ouverture de fixation (10, 11), une douille (12) étant de préférence agencée dans l'ouverture de fixation (10, 11) et/ou dans l'extrémité de type anneau ou de type douille.

9. Support selon l'une quelconque des revendications précédentes, **caractérisé en ce qu'**un premier emplacement de liaison (8) et un emplacement de liaison supplémentaire (9) sont présents, le premier élément de retenue (13) s'étendant notamment depuis le premier emplacement de liaison (8) dans la direction d'un premier côté (5) de la structure de base (2) et un élément de retenue supplémentaire (14) s'étendant depuis l'emplacement de liaison supplémentaire (9) dans la direction d'un deuxième côté (6), détourné du premier côté (5), de la structure de base (2), un évidement (7) étant de préférence agencé dans la structure de base (2) entre les deux emplacements de liaison (8, 9).

10. Support selon l'une quelconque des revendications précédentes, **caractérisé en ce qu'**un élément d'insertion (27, 28, 37, 38) en métal pour l'absorption de forces en cas de collision est reçu dans une zone de bord (3, 4) de la structure de base (2).
